# EUROPEAN PATENT APPLICATION

(11) **EP 2 933 714 A1**
(43) Date of publication of application: **21.10.2015**
(21) Application number: 14164823.8
(22) Date of filing: 15.04.2014
(51) Int. Cl.: G06F 3/0488, G06F 3/0481

(54) **Method of operating a touch screen device, display control unit and touch screen device**

(71) Applicant: idp invent ag, 4600 Olten (CH)
(72) Inventor: Schütz, Matthias, 4600 Olten (CH)

(57) **Abstract**

The present invention concerns a method of operating a touch screen device (10), in particular a mobile telephone or a portable computer. The method comprises the steps of:
- displaying an operational object (20) on a display unit (12) of the touch screen device (10);
- displaying a feedback indicator (30) on the display unit (12) of the touch screen device (10);
- detecting a user input by means of a touch-sensitive area on the touch screen device (10), the touch-sensitive area being associated with the operational object (20); and
- in response to the user input, moving the feedback indicator (30) along a movement path on the display unit to give a dynamically progressing visual feedback of the user input to the user of the touch screen device (10).

In this way a particularly intuitive visual feedback is achieved which reduces or eliminates disturbances or irritations to the user of the touch screen device.

## Description

### TECHNICAL FIELD OF THE INVENTION

The present invention concerns a method of operating a touch screen device, a display control unit and a touch screen device such as mobile telephone or a portable computer that is operable according to the method.

### BACKGROUND OF THE INVENTION

Touch screens with visual feedback are well known in the prior art, including the problem specific to touch screens, namely that the visual feedback is hidden by the finger tip of the user at the moment the user actually touches the touch screen.

For solving these problems, EP 1812892 B1 proposes to display an enlarged visual indication by showing an opaque disk around the contact area of the finger tip. The enlarged indication remains visible during the touch operation.

### SUMMARY OF THE INVENTION

The present invention has the objective to propose an improved method of operating a touch screen device, an improved display control unit and an improved touch screen device.

This objective is met by a method with the features specified in claim 1. A display control unit, a touch screen device and further embodiments of the invention are specified in the further claims.

The present invention concerns a method of operating a touch screen device, in particular a mobile telephone or a portable computer. The method comprises the steps of:
- displaying an operational object on a display unit of the touch screen device;
- displaying a feedback indicator on the display unit of the touch screen device;
- detecting a user input by means of a touch-sensitive area on the touch screen device, the touch-sensitive area being associated with the operational object; and
- in response to the user input, moving the feedback indicator along a movement path on the display unit to give a dynamically progressing visual feedback of the user input to the user of the touch screen device.

In this way, a particularly intuitive visual feedback is achieved which reduces or eliminates disturbances or irritations to the user of the touch screen device.

The term "touch" as used within the description and the claims is understood as operational interaction. Thus, the touching includes an actual physical contact as well as a close proximity sufficient to trigger an action. For example, a capacitive coupling over a certain distance is also regarded as touching in the sense of the invention.

In operation, when the user of the touch screen device wishes to give a control command that is related to the operational object, the user touches the touch-sensitive area, which is assigned of the operational object. In most cases, this touch -sensitive area is substantially identical to the contour of the displayed operational object, thus giving the user the impression, that he is actually touching the displayed operational object. In this sense and throughout the description and the claims, the meaning of "touching the operational object on the display unit" shall be understood as operating the operational object via the associated tactile user input interface, i.e. via the touch-sensitive area.

Further, the visual feedback is a visual perception of a tactile user input to the user of the touch screen device to provide a visual cue to the user confirming the touch screen device has detected his input. The visual feedback is particularly useful for touch screen devices on which a tactile or acoustical feedback is not available or not adequately useable.

The operational object represents any kind of software that is selectable on the touch screen device, for example an executable computer program, an application program, also called "app", or a browser window. The touching action of the operational object controls the operation of this software, for example the touching action starts the computer program and/or displays a graphical user interface (GUI) on the display unit.

Surprisingly, the movement of the feedback indicator is very distinctive and informative and does not attract excessive and/or unnecessary user attention, which in turn reduces or eliminates disturbances and/or irritations to the user of the touch screen device.

Further, the movement along the movement path, i.e. dynamically changing of the position of the feedback indicator on the display unit, is used give to the user the impression of a three-dimensional movement of the displayed object. This is particularly useful to distinguish the visual feedback from other optical impressions displayed on the touch screen device.

Further the visual feedback according to the invention is very reliable, safe and convenient, because the user can easily and instantly confirm and/or verify the effect of his input action without need to observe the environment of the operational object in detail.

In addition, with the method according to the invention a visual feedback is achieved without interference with the visual appearance of the operational object. In a further example, interference with the environment of the operational object, in particular interference with neighboring objects, is reduced or avoided.

In an embodiment of the invention, the method comprises moving of the feedback indicator in substantially radial direction of the operational object, in particular towards or away from the operational object. Such a movement enhances the impression of a three-dimensional movement of the displayed object.

In another example, the feedback indicator moves towards or away from the operational object, in particular moves forward/backward on the same movement path. This gives the user the impression of lowering and raising the operational object.

In a further example, the moving path of the feedback indicator is substantially in coincidence with or deviates from the radial direction of the operational object.

In a further embodiment of the method according to the invention, the displaying of the feedback indicator comprises positioning the starting point of the movement path in at least one of the following ways:
- separate from the operational object,
- apart from the operational object, in particular so that the distance between the center of the operational object and the center of the feedback indicator is larger than half of the maximum diameter of the operational object,
- at least partly outside an area that is obstructed by a finger or a pointing device during user input, and
- at least partly outside of the touch-sensitive area that is associated with the operational object.

In a further embodiment of the method according to the invention, the feedback indicator represents a projection of the operational object, in particular a shadow, further in particular an elliptical shadow. Such a feedback indicator achieves the user impression that the displayed object is elevated above the display plane and illuminated by an exterior light source.

An elliptical shadow is particularly intuitive, because the behavior of the feedback corresponds to commonly experienced situations. In one example the ratio between the major axis of the ellipse and the minor axis of the ellipse is in the range from 10% to 60%, in particular from 20% to 40%.

In a further embodiment of the method according to the invention, the moving of the feedback indicator comprises changing the appearance of the feedback indicator, in particular with regard to at least one of:
- size,
- blurring,
- brightness,
- shape,
- color, and
- color intensity.

For example, the blurring enhances the user impression that the displayed operational object is elevated above the display plane and diffusely illuminated.

In another example, the method further comprises changing the appearance, in particular the size, of the operational object in dependency of the position of the feedback indicator and/or the virtual elevation of the operational object.

In a further example the step of moving the feedback indicator comprises moving the feedback indicator with an angle in the range of 0° to 70°, in particular 30° to 50°, relative to the vertical axis of the touch screen device and/or changing the size of the feedback indicator during the movement along the movement path by at least 50%, in particular more than 100%, further in particular more than 200%.

In a further embodiment of the method according to the invention, the operational object represents a free-form shaped object, in particular an operational object with a transparent background and/or a sphere or a ball. In this way a particularly distinctive visual feedback is achieved. In one example the free-form shaped object is a sphere giving the impression of floating above the touch screen, which creates a particularly intense three-dimensional effect (3-D effect).

In a further embodiment of the method according to the invention, the operational object represents at least one of:
- a graphical symbol,
- an icon,
- a visual representation of a button, and
- a visual representation of a key of a keyboard or keypad. In one example, the icon comprises an intuitive and/or well known graphical representation of the associated software or application program, which provides together with the movement of the visual feedback a particularly convenient operation of the touch screen device.

In a further embodiment of the method according to the invention, at least a part of the movement of the feedback indicator, in particular speed and/or acceleration, corresponds to an intensity of the user input, in particular to at least one of:
- a strength of the touching action,
- a duration,
- a number of repetitions, and
- a repetition rate.

This gives the impression to the user that the operational object is directly moved and/or controlled by his finger tip. Further, the relation to the intensity of the user input allows for direct and precise control of the input action, which is particular advantageous for complex input actions.

In one example, the strength of the touching action is determined by measuring the size of the actual contact area and/or the pressure applied to the touch-sensitive area. Preferably, the visual feedback is given with a short latency period to allow for precise and/or efficient control actions. In a further embodiment of the method according to the invention, at least a part of the movement of the feedback indicator, in particular the return to its inactive position, is performed according to a predefined function of time, in particular by keeping the feedback indicator in its active position for a predetermined period of time. This provides time to the user for checking the effect of the user input and/or time for starting a software on the touch screen device such as an application program that is associated with the operational object. For example, the inactive position corresponds to the starting position or first position of the movement path and the active position corresponds to the end position or second position of the movement path.

In one example, a short tip on the touch screen initiates the movement of the feedback indicator, in particular a go and return movement.

In a further embodiment of the method according to the invention, at least a part of the movement of the feedback indicator, in particular speed and/or acceleration, corresponds to a physical effect, in particular at least one of:
- an inertia,
- an air friction, and
- a buoyancy.

The invention further concerns a display control unit for a touch screen device, wherein the display control unit is configured to perform the method according to any one of the preceding embodiments.

The invention further concerns a display control unit for a touch screen device, wherein the display control unit is connectable to an input unit for receiving a user input signal and to a display unit for transmitting image display data to the display unit, wherein the image data represents a feedback indicator that is generated in response to the user input signal. The display control unit is configured to generate the image display data representing a movement of the feedback indicator along a movement path on the display unit so as to give a dynamically progressing visual feedback of the user input to the user of the touch screen device. In this way, a particularly intuitive visual feedback is achieved which reduces or eliminates disturbances or irritations to the user of the touch screen device.

In a further embodiment of the display control unit according to the invention, the display control unit is configured to generate the image display signal by using at least one of:
- a chronologically ordered series of stored images,
- at least one time dependent parameter, and
- a calculation according to a time-dependent mathematical function.

In one example, the parameter for generating the display of the visual feedback, in particular an image parameter such as a position, a size, a brightness, a blurring and a color, is altered in dependency of time to change from a initial value at the starting position of the movement path to finial value at the end position of the movement path and vice versa.

The invention further concerns a touch screen device, in particular a mobile telephone or a portable computer such as a tablet computer, comprising a display unit that is controlled by the display control unit according to any one of the previous embodiments of the display control unit.

In a further embodiment of the touch screen device according to the invention, the touch screen device is a portable and/or handheld device, wherein in particular the maximum diameter of the operational object is less than 2 cm and/or less than the diameter of a finger tip or a pointing device intended to be used together with the touch screen device. Thereby the size specification of the finger tip refers to a normal hand of an adult user.

In one example the maximum diameter of the operational object is equal to or less than ca. 1.5 cm, in another example equal to or less than ca. 1 cm. In another example the pointing device is a stylus or a pen.

The effects and advantages of the above mentioned method also apply to the display control unit and the touch screen device and vice versa. Further, it is expressly pointed out that any combination of the above-mentioned embodiments, or combinations of combinations, is subject to a further combination. Only those combinations are excluded that would result in a contradiction.

### BRIEF DESCRIPTION OF THE DRAWINGS

Below, the present invention is described in more detail by means of exemplary embodiments and the attached drawings, wherein:
- Fig. 1: shows a simplified illustration of a mobile telephone 10 according to the invention with an icon 20 and a shadow 30;
- Fig. 2: a simplified perspective illustration of a finger tip touching the icon 20 and the shadow 30 according to Fig. 1;
- Fig. 3: an illustration according to Fig. 2, the shadow 30 moving back after the finger tip has been removed;
- Fig. 4: a simplified block diagram illustrating a display control unit 18 of the mobile telephone according to Fig. 1;
- Fig. 5: a simplified flow diagram illustrating the method according to the invention for operating the mobile telephone of Fig. 1;
- Fig. 6: a simplified diagram illustrating the time curve of signals SU and SI during operation of the mobile telephone according to Fig. 1;
- Fig. 7: a diagram according to Fig. 6 with a further mode of operation;
- Fig. 8: a simplified illustration showing a series of images of an icon 20 according to Fig. 1;
- Fig. 9: an illustration according to Fig. 8 with a round-shaped icon and an elliptical shadow; and
- Fig. 10: an illustration according to Fig. 9 with an icon that represents an illuminated sphere.

### BRIEF DESCRIPTION OF THE INVENTION

The embodiments described herein are meant as illustrating examples and shall not confine the invention and shall not be interpreted as limitations of the invention.

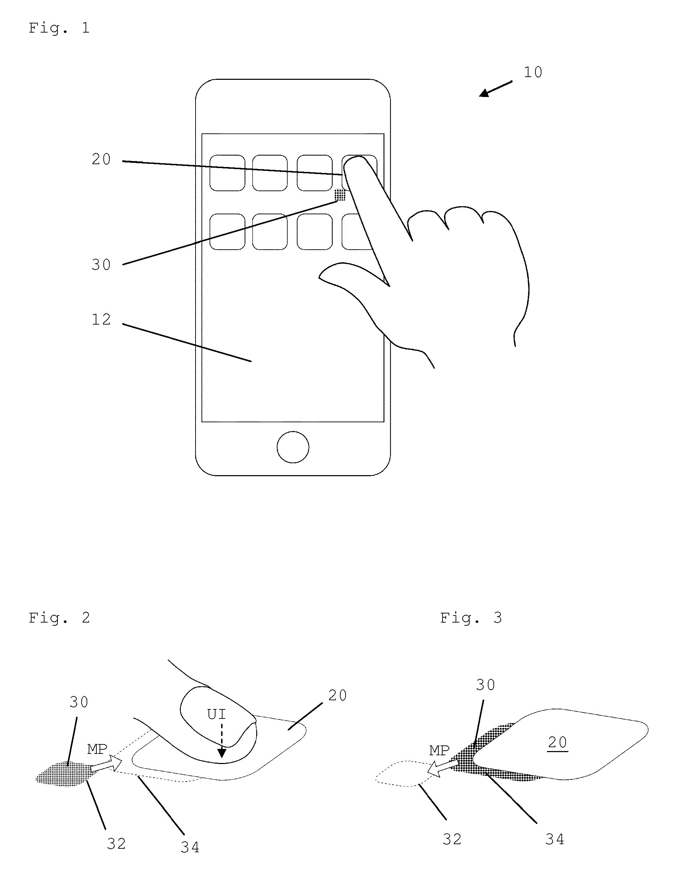

Fig. 1 shows a simplified illustration of a mobile telephone 10, which is an example of a touch screen device according to the invention.

The mobile telephone 10 is a portable handheld device and has a touch screen which comprises a display 12 as display unit and a transparent touch-sensitive screen as a layer on top of the display 12 (not visible). The display 12 displays a number of icons, in this case eight icons, which will be explained in further detail below through the representative example of an icon 20. The touch-sensitive screen comprises an equal number of touch-sensitive areas, wherein each area is associated with a respective icon. The display 12 further displays a shadow 30, which is associated with the icon 20, and serves as feedback indicator 30 of the icon 20.

The hand of the user as shown in Fig. 1 is a schematically illustration only and does not show the actual size relation between the hand of the user and the mobile telephone 10.

In operation, when the user of the mobile telephone 10 wishes to give a control command that is related to the icon 20, the user touches the assigned touch-sensitive area of the icon 20. In this example, the touch-sensitive area is identical to the shape of the displayed icon 20. Thus, the user has the impression, that he actually touches the icon 20, which is displayed on the display 12.

Fig. 2 shows a simplified perspective illustration and detailed view of the icon 20 and the feedback indicator 30 according to Fig. 1.

Further, Fig. 2 shows a finger tip, which touches the icon 20 and indicates a corresponding user input UI (dotted arrow). The finger tip is merely a schematically illustration and does not show the actual size relation between the finger tip of the user and the icon 20.

In operation, the touch-screen device detects the user input UI by means of a touch-sensitive area and moves the shadow 30 by displaying a chronologically ordered series of images on the display 12. This gives the impression to the user that the shadow 30 dynamically moves on the display. In this example, the refresh rate of the images is approx. 30 frames per second such that - similar to a film - the shadow appears to move continuously in a smooth transition. However, other frame rates such as 15, 50 or 60 frames per second may also be used.

In this example, the shadow 30 moves along a movement path MP from a starting position, a first position 32, to an end position, a second position 34. This movement path MP is indicated in Fig. 2 by the block arrow. The shadow 30 gives the user the impression that the icon 20 is elevated above the display plane and illuminated by an exterior light source.

In the starting position the shadow 30 is positioned separate from the icon 20, such that the shadow lies outside an area that is obstructed by a finger or a pointing device during user input. Thus, the shadow 30 is clearly visible at least at the starting position. The shadow 30 moves in a substantially radial direction of the icon 20 and towards the icon 20 and gives the user the impression of a three-dimensional movement of the icon 20.

During the movement of the shadow 30 the size increases and the brightness decreases, which enhances the effect of a three- dimensional movement of the icon 20. In this example, the shadow 30 moves at an angle of 45° relative to the vertical axis of the mobile telephone 10 and increases its size by more the 100%. In another example the size of the shadow 30 increases in the range of 25% to 800%, in particular in the range of 50% to 400%.

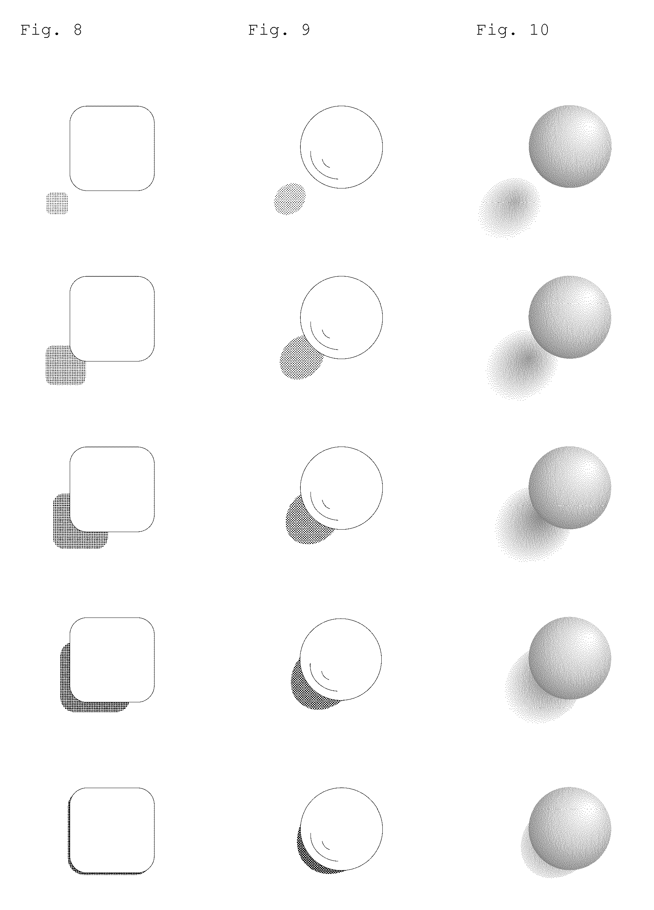

Further examples of chronologically ordered series of images are shown in Fig. 8 to Fig. 10.

The movement along the movement path MP gives a dynamically progressing visual feedback of the input command, i.e. the touching of the icon. In this way an intuitive visual feedback is achieved which reduces or eliminates disturbances and/or irritations of the user. In addition, the user can conveniently and instantly verify the effect of his input actions.

Fig. 3 shows the situation of Fig. 2 a moment later, as the shadow 30 moves back towards its starting position after the user has removed the finger tip from icon 20.

Accordingly, the shadow moves along a movement path MP from the second position 34 to the first position 32. This movement path MP is indicated in Fig. 3 by the block arrow. Thus, the shadow 30 moves in substantially radial direction of the icon 20 and away from the icon 20.

The forward/backward movement on the same movement path gives the user the impression of lowering and raising the icon 20.

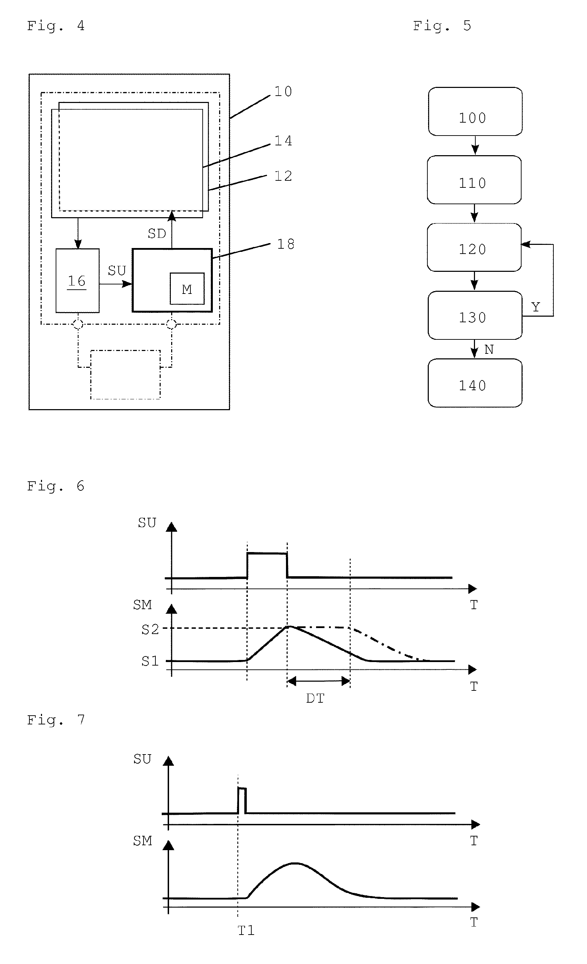

Fig. 4 shows a simplified block diagram illustrating the mobile telephone 10 according to Fig. 1 with a display control unit 18 according to the invention (shown as bold line). The display control unit 18 is configured to perform the method according to the invention.

The mobile telephone 10 further comprises the display 12 according to Fig. 1, a touch-sensitive screen 14 and an input unit 16. The transparent touch-sensitive screen 14 is a transparent layer on top of the display 12 (as indicated by the dashed line) and electrically connected to the input unit 16. The display control unit 18 is electrically connected to an input unit 16 for receiving a user input signal SU. Further the display control unit 18 is electrically connected to the display unit 12 for transmitting image display data SD to the display unit 12.

In this example, the display control unit 18 is configured to generate the image display data SD that represents the movement of the shadow 30 according to Fig. 2 by a chronologically ordered series of images. In another example, the images are generated on the fly, for example by evaluating a mathematical function and/or rendering an image according to drawing instructions. Thus, the image display data SD represents the movement of the shadow 30 that is generated in response to the user input signal SU.

In this example, the display control unit 18 comprises a memory M, which is used to store data of images, which are used to generate the image display data SD. The memory stores main images, so called key-frames, and the intermediate images for a smooth transition of the shadow are calculated from these key-frames, for example by a blending operation. This way an efficient use of memory and processing power is achieved.

The display 12, the touch-sensitive screen 14, an input unit 16 and the display control unit 18 can be combined in a single unit operating independently from the main processing unit of the mobile telephone 10, as indicated by the dashed-dotted line. The way a particular low latency of the user feedback is achieved.

Fig. 5 shows a simplified flow diagram illustrating the method according to the invention for operating the mobile telephone of Fig. 1.

In this example, the method performs a number of steps, depicted as blocks 100, 110, 120, 130 and 140. The steps are explained by the following instructions, wherein the reference symbols refer to Fig. 2:
- Block 100:: Displaying the icon 20 and the shadow 30 on the display 12 of the mobile telephone 10, wherein the shadow 30 is positioned at a first position 32 (starting position).
- Block 110:: Detecting a user input UI by means of a touch-sensitive area on the mobile telephone 10, wherein the touch-sensitive area is associated with the icon 20.
- Block 120:: Determining an updated image that corresponds to the shadow 30 at a position moved along the movement path MP by a predefined distance, i.e. a step distance, and displaying the updated image.
- Block 130:: Query, whether the user input UI is still present; if yes (Y) return to block 120, if not (N) go to block 140.
- Block 140:: Displaying the shadow 30 at the second position 34 (end position).

The performing of these steps give a dynamically progressing visual feedback to the user of the mobile telephone 10, wherein the distance of movement of the shadow 30 linearly depends on the duration of the user input UI.

In this example, the images as displayed at a rate of 30 images per second (30 frames per second) and the movement speed is approximately 3 cm/s. Thus, the predefined distance (step distance) mentioned in block 120 is approximately 1 mm. Other step distances are also possible, for example series of non-constantly changing values, in particular a progressively changing of the step distance for providing a positive or negative acceleration of the shadow.

Fig. 6 shows a simplified diagram illustrating the course of time during the operation of the mobile telephone as shown in Fig. 2. The upper part of the diagram shows the user input signal SU according to Fig. 4, which corresponds to the user input UI as shown in fig. 2. The lower part of the diagram shows a movement signal SM, which directly and linearly corresponds to the position of the shadow on the movement path.

The movement signal SM is a time dependent parameter that is used by the display control unit for generating corresponding time dependent image parameters such as the position, size, brightness and blurring of the shadow. These image parameters are then used to generate the display signal SD (Fig. 4). Thus, the displayed image is generated according the current value of the time dependent movement signal SM. Examples of such an image generation are shown in Fig. 8 to Fig. 10.

Both signals, the user input signal SU and the movement signal SM, are dependent on the time T and are depicted on their respective time axis.

During user input, i.e. during touching the touch-sensitive area, the user input signal SU is at high level, otherwise at low level. At the starting position of the movement path, i.e. at the first position 32 (Fig. 2) of the shadow, the level of the movement signal SM is at a signal level S1 and at the end position of the movement path, i.e. the second position 34 (Fig. 2) of the shadow, the level of the movement signal SM is at a signal level S2.

In this example, the movement of the shadow corresponds to the intensity of the user input by determining the duration of the touching action. The movement signal SM increases linearly during a high level of the user input signal SU until it reaches signal level S2 and linearly decreases back to the signal level S1 after the user input signal SU has dropped to its lower level (lower diagram, solid line). This enables a precise control of the covered distance along the movement path.

Alternatively, the shadow may be kept at the second position for a certain time period DT before it moves back to its first position. Thus, the corresponding movement signal SMP remains at the signal level S2 during the time period DT and returns to the signal level S1 with a delay (lower diagram, dotted-dashed line). This alternative movement behavior provides time to the user for confirming the effect of his input and also time for a starting process of an application that is associated with the icon. For example, the time period DT is a predefined value between 0.1 and 1.5 seconds, in particular between 0.25 and 0.75 seconds.

In another example, the touching strength is determined by measuring the size of the actual contact area of the finger tip on the touch-sensitive area. This gives the impression to the user that the icon is directly moved by his finger tip.

Fig. 7 shows a diagram according to Fig. 6 with a further mode of operation. In this example, the starting of the movement is initiated by the user by a short input action, e.g. a tip on the touch-sensitive area, and the returning of the shadow to its first position (starting position), is performed according to a predefined function of time.

In this example, the course of time of the movement signal SM corresponds to the physical effects of inertia and buoyancy.

Fig. 8 is a simplified illustration showing a chronologically ordered series of images of an icon 20 according to Fig. 1. The image on top of the vertical row corresponds to the first position 32 (starting position) and the image at the end corresponds to the second position 34 (end position). The intermediate images are calculated by linear interpolation.

In another example, the size of the icon 20 changes in dependency of the position of the shadow 30, for example in that the size of the icon 20 decreases by 10%. This further enhances the impression of a three-dimensional movement of the icon 20.

Fig. 9 shows an illustration according to Fig. 8 with a round-shaped icon showing a circle, which represents the contour of a sphere. The properties of a sphere are enhanced by a transparent background and the two curved lines in the interior of the circle representing different levels of brightness.

In addition, the shadow has an elliptical shape according to a projection of a sphere on a surface by a certain angle. In this example the angle corresponds to about 40° with respect to the surface normal and the ratio between the major axis and the minor axis of the ellipse is approximately 25%.

The images according to this example are very schematically illustrations only. However, they depict a convincing impression of the movement of a sphere. Advantageously these images only require a low amount of computing power and/or energy consumption.

Fig. 10 shows an illustration according to Fig. 9 with an icon that represents a diffusely illuminated sphere and a blurred elliptical shadow. The blurred shadow gives a particularly intuitive 3-D effect, because it simulates the actual physical behavior of a diffuse light projection.

Further, the changing of the blurring enhances the impression of the user that the sphere is elevated above the display plane and that the sphere lowers or raises in response to the user input.

## Claims

1. A method of operating a touch screen device (10), in particular a mobile telephone or a portable computer, the method comprising the steps of:
- displaying an operational object (20) on a display unit (12) of the touch screen device (10);
- displaying a feedback indicator (30) on the display unit (12) of the touch screen device (10);
- detecting a user input (UI) by means of a touch-sensitive area on the touch screen device (10), the touch-sensitive area being associated with the operational object (20); and
- in response to the user input (UI), moving the feedback indicator (30) along a movement path (MP) on the display unit (12) to give a dynamically progressing visual feedback of the user input (UI) to the user of the touch screen device (10).

2. The method according to claim 1, wherein the moving of the feedback indicator (30) comprises moving the feedback indicator (30) in substantially radial direction of the operational object (20), in particular towards or away from the operational object (20).

3. The method according to claim 1 or 2, wherein the displaying of the feedback indicator (30) comprises positioning the starting point of the movement path (MP) in at least one of the following ways:
- separate from the operational object (20),
- apart from the operational object (20), in particular so that the distance between the center of the operational object (20) and the center of the feedback indicator (30) is larger than half of the maximum diameter of the operational object (20),
- at least partly outside an area that is obstructed by a finger or a pointing device during user input (UI), and
- at least partly outside of the touch-sensitive area that is associated with the operational object (20).

4. The method according to any one of the preceding claims, wherein the feedback indicator (30) represents a projection of the operational object (20), in particular a shadow, further in particular an elliptical shadow.

5. The method according to any one of the preceding claims, wherein the moving of the feedback indicator (30) comprises changing the appearance of the feedback indicator (30), in particular with regard to at least one of:
- size,
- blurring,
- brightness,
- shape,
- color, and
- color intensity.

6. The method according to any one of the preceding claims, wherein the operational object (20) represents a free-form shaped object, in particular an operational object (20) with a transparent background and/or a sphere or a ball.

7. The method according to any one of the preceding claims, wherein the operational object (20) represents at least one of:
- a graphical symbol,
- an icon (20),
- a visual representation of a button, and
- a visual representation of a key of a keyboard or keypad.

8. The method according to any one of the preceding claims, wherein at least a part of the movement of the feedback indicator (30), in particular speed and/or acceleration, corresponds to an intensity of the user input, in particular to at least one of:
- a strength of the touching action,
- a duration,
- a number of repetitions, and
- a repetition rate.

9. The method according to any one of the preceding claims, wherein at least a part of the movement of the feedback indicator (30), in particular the return to its inactive position, is performed according to a predefined function of time, in particular by keeping the feedback indicator (30) in its active position for a predetermined period of time (TA).

10. The method according to any one of the preceding claims, wherein at least a part of the movement of the feedback indicator (30), in particular speed and/or acceleration, corresponds to a physical effect, in particular at least one of:
- an inertia,
- an air friction, and
- a buoyancy.

11. A display control unit (18) for a touch screen device (10), wherein the display control unit (18) is configured to perform the method according to any one of the preceding claims.

12. A display control unit (18) for a touch screen device (10), wherein the display control unit (18) is connectable to an input unit (14) for receiving a user input signal (SU) and to a display unit (12) for transmitting image display data (SD) to the display unit (12), the image display data (SD) representing a feedback indicator (30) that is generated in response to the user input signal (SU),
wherein the display control unit (18) is configured to generate the image data (SI) representing a movement of the feedback indicator (30) along a movement path (MP) on the display unit (12) to give a dynamically progressing visual feedback of the user input (UI) to the user of the touch screen device (10).

13. The display control unit (18) according to claim 12 or 13, wherein the display control unit (18) is configured to generate the image display signal (SD) by using by using at least one of:
- a chronologically ordered series of stored images,
- at least one time dependent parameter, and
- a calculation according to a time-dependent mathematical function.

14. A touch screen device (10), in particular a mobile telephone or a portable computer such as a tablet computer, comprising a display unit (12) that is controlled by the display control unit (18) according to any one of the claims 11 to 13.

15. The touch screen device (10) according to claim 14,
wherein the touch screen device is a portable and/or handheld device, wherein in particular the maximum diameter of the operational object (20) is less than 2 cm and/or less than the diameter of a finger tip or a pointing device intended to be used together with the touch screen device (10).
